# EUROPÄISCHE PATENTSCHRIFT

(11) **EP 1 075 326 B1**
(45) Veröffentlichungstag und Bekanntmachung des Hinweises auf die Patenterteilung: **02.07.2003**
(21) Anmeldenummer: 99924890.9
(22) Anmeldetag: 29.04.1999
(51) Int. Cl.: B01L 3/00, B01J 19/00

(54) **VORRICHTUNG FÜR DEN TRANSPORT VON FLÜSSIGKEITEN ENTLANG VORGEGEBENER LEITWEGE**
DEVICE FOR TRANSPORTING LIQUIDS ALONG PREDETERMINED GUIDEWAYS
DISPOSITIF POUR TRANSPORTER DES LIQUIDES LE LONG DE VOIES DE GUIDAGE PREDETERMINEES

(30) Priorität: 30.04.1998 DE 19819302; 23.06.1998 DE 19827754
(43) Veröffentlichungstag der Anmeldung: 14.02.2001
(73) Patentinhaber: Graffinity Pharmaceuticals Aktiengesellschaft, 69120 Heidelberg (DE)
(72) Erfinder: SCHMIDT, Kristina, D-69126 Heidelberg (DE); VETTER, Dirk, D-69120 Heidelberg (DE)
(74) Vertreter: Pfeiffer, Rolf-Gerd, Dipl.-Phys.
(86) Internationale Anmeldenummer: EP9903104
(87) Internationale Veröffentlichungsnummer: WO99056878

(56) Entgegenhaltungen:
- EP-A- 0 075 605
- WO-A-91/17832
- WO-A-97/33737
- WO-A-99/00657
- US-A- 5 429 807

## Beschreibung

Die Erfindung betrifft eine Vorrichtung für den Transport von Flüssigkeiten entlang vorgegebener Leitwege.

Vorrichtungen für den Transport von Flüssigkeiten entlang vorgegebener Leitwege, bspw. in Form von Rohren oder Schläuchen, sind schon seit Jahrhunderten bekannt. Mit dem Voranschreiten des wissenschaftlichtechnischen Fortschritts wurden diese Vorrichtungen für bestimmte Anwendungsgebiete, bspw. die Hochdruckflüssigkeitschromatographie oder für Pipettiersysteme, immer weiter miniaturisiert.

Auf planare Trägerplatten für flüssige Proben abgestimmte Pipettiersysteme werden seit Jahrzehnten im automatisierten labortechnischen Bereich eingesetzt. Der Einsatz dieser Technologie ermöglicht eine parallele, schnelle und sehr rationelle Bearbeitung der Proben. Dabei sind die Proben meist in einem Raster angeordnet, so daß die Identität der Probe mit einer Flächenkoordinate verknüpft werden kann und eine exakte Positionssteuerung der Pipettiersysteme möglich ist. Die handelsüblichen Pipettiersysteme unterliegen hierbei mit dem Fortschreiten der Dosiertechnologie einer kontinuierlichen Miniaturisierung, wobei dieser physikalische Grenzen gesetzt sind, unterhalb derer ein verläßliches Dosieren kleinster Volumina nicht mehr möglich ist.

Neben den Pipettiersystemen sind Methoden zur gleichzeitigen Benetzung von unterschiedlichen Bereichen planarer Trägerplatten mit verschiedenen Flüssigkeiten bekannt. Diese Methoden nutzen dicht geschlossene mikrofluidische Kanäle, die dadurch gebildet werden, daß die flüssigkeitsverteilenden Strukturen in die Trägerplatte eingelassen sind und durch eine auf die Trägerplatte aufgebrachte unstrukturierte Deckplatte verschlossen werden, bzw. umgekehrt. Beispielsweise ist in WO 97/33737 eine strukturierte Deckplatte, die in Kontakt mit einer planaren Trägerplatte gebracht ist, offenbart. Durch die feste, unlösbare Verbindung dieser beiden Platten, bspw. durch Verkleben, wird ein Übersprechen von Flüssigkeiten zwischen den Kanälen verhindert.
Der Nachteil der fest und unlösbar verbundenen Systeme ist, daß die Flüssigkeitswege starr definiert sind und jede Umverteilung der Flüssigkeiten nur durch sehr komplexe dreidimensionale Kanalführungen sowie zusätzlich eingebaute Ventile realisiert werden kann.
Ein Beispiel für die dreidimensionale Kanalführung ist in US-A-5,681,484 beschrieben, welche für die klinische Diagnostik und kombinatorisch-chemische Synthesen Verwendung findet, wobei mehrlagig mikrostrukturierte Schichtaufbauten aus Glas und eine ventilgesteuerte Fluidik zur Anwendung kommen.
Dieses Mikrofluidikelement hat jedoch den Nachteil, daß es nicht mit planaren Trägerplatten verwendet werden kann, sondern vielmehr mikrotiterplattenähnliche Kavitätsanordnungen zum Auffangen der Flüssigkeiten erfordert.

Weiterhin gibt es neben den vorangegangen beschriebenen unlösbar verbundenen, Kanal-tragenden Systemen aus planarer Träger- und Deckplatte auch lösbar verbundene Systeme. Ein Beispiel für die flexible Verbindung zwischen planarer Trägerplatte und strukturierter Deckplatte ist US-A-5,429,807, die eine Vielzahl von gelösten DNA-Synthesereagenzien durch die Strukturierung der Deckplatte zeilenweise auf einer quadratischen Glasoberfläche mit chemisch reaktiven Gruppen benetzt und dabei zur Reaktion bringt. Nach erfolgter Reaktion wird bei diesem Beispiel die Deckplatte von der Trägerplatte getrennt, um 90° gedreht und erneut auf den Träger aufgesetzt, so daß der Träger wiederum mit dem gleichen Satz von Reagenzien spaltenweise benetzt wird. Auf diese Art entstehen an den Schnittpunkten der Zeilen und Spalten die gewünschten Produktkombinationen auf dem Träger.
Der Nachteil dieser lösbar verbundenen Systeme ist, daß die aus starrem, unflexiblem Material bestehenden Träger- und Deckplatten feine Fugen oder Spalte tragen können, welche aufgrund der Kapillarwirkung befüllt werden, so daß es zum unerwünschten Übersprechen zwischen Kanälen und somit zum Vermischen der verschiedenen Flüssigkeiten auf der Trägerplatte kommt.

Eine fugenfreie, lösbare Verbindung zwischen Träger- und Deckplatte, die ein Übersprechen der Flüssigkeiten verhindert, erfordert ein zwischengelagertes Abdichtmaterial und eine aufwendige mechanische Konstruktion, wodurch das System für komplexe Reagenzverteilungsfolgen und Automatisierungen nicht geeignet ist.

Die WO-A-9117832 beschreibt Objekträger bei denen Erhebungen durch Kapillarinaktive Ausnehmungen getrennt sind.

Der Erfindung liegt die Aufgabe zugrunde, eine Vorrichtung für den Transport von Flüssigkeiten entlang vorgegebener Leitwege anzugeben, die ein Übersprechen zwischen unterschiedlichen Leitwegen infolge von Kapillareffekten vermeidet und die übrigen Nachteile des Standes der Technik umgeht.

Die Aufgabe wird durch die Merkmale des ersten Patentanspruchs gelöst. Vorteilhafte Ausgestaltungen sind von den nachgeordneten Ansprüchen erfaßt.

Das Wesen der Erfindung besteht dabei darin, daß durch die erfindungsgemäße Vorrichtung gezielt Kapillarspalte generiert sind, die den Flüssigkeitstransport durch Kapillarkräfte bewirken, wobei der Verlauf des Flüssigkeitstransports durch den Verlauf der Kapillarspalte vorgegeben ist und ein Übersprechen der verschiedenen Flüssigkeiten bei bestimmungsgemäßer Betriebsweise ausgeschlossen ist.

Die Erfindung soll nachstehend anhand schematischer Ausführungsbeispiele näher erläutert werden. Es zeigen:
- Fig. 1 eine: erste Ausführungsform der erfindungsgemäßen Vorrichtung,
- Fig. 1a eine: Möglichkeit der Flüssigkeitszuführung bei einer Vorrichtung nach Fig. 1
- Fig. 2 eine: zweite Ausführungsform der erfindungsgemäßen Vorrichtung.

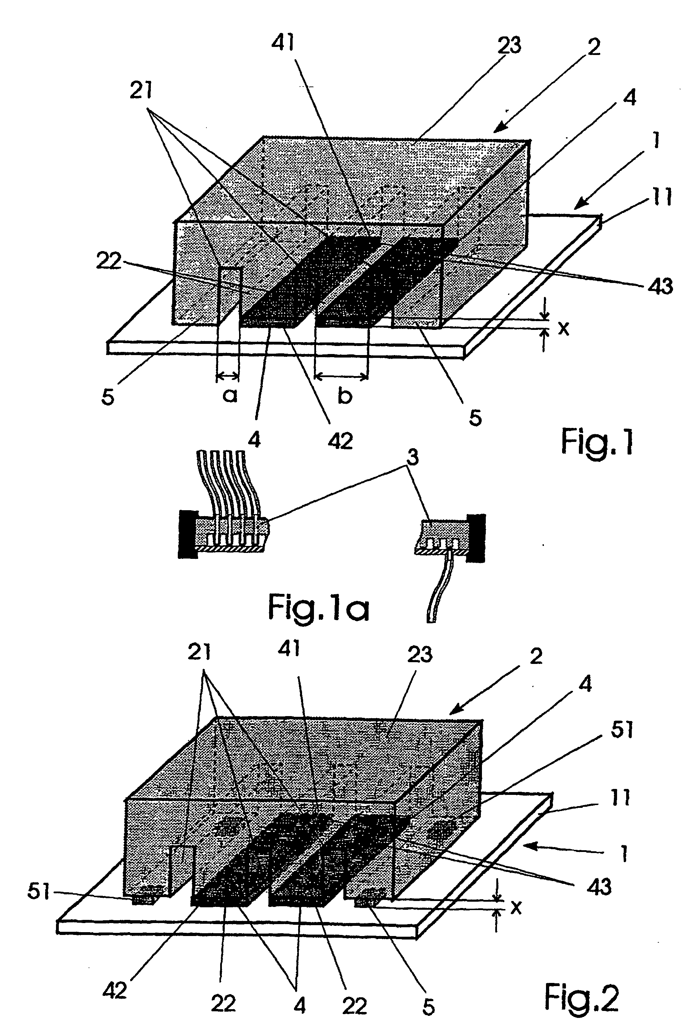

Bei der Vorrichtung für den Transport von Flüssigkeiten entlang vorgegebener Leitwege wird, wie in Fig. 1 dargestellt, von einem Körper 2 ausgegangen, wobei die die Leitwege bildenden Strukturen auf einen entsprechend komplementär geformten Gegenkörper 1 aufsetzbar sind. Wenn im Rahmen der Erfindung die Maßgabe gesetzt ist, daß der Körper 2 zum Gegenkörper 1 komplementär geformt ist, ist darunter zu verstehen, daß bspw. bei einer planen Trägerplatte 11 der Körper 2 vor Einbringung der Ausnehmungen 21 ebenfalls plan ist; analoges gilt für bspw. konvex ausgeformte Körper 2 und Gegenkörper 1 oder beliebig anders ausgeformte Körper 2 und Gegenkörper 1, wie bspw. Rohre. Der Körper 2 ist dabei mit kapillarspaltbildenden Erhebungen 22 sowie Ausnehmungen 21 versehen, wobei zwischen benachbarten Erhebungen 22 jeweils eine so große Ausnehmung 21 verbleibt, daß diese kapillarinaktiv ist. Gleichzeitig sind bei der Vorrichtung Mittel 5 zur Beabstandung, die in den Fig. 1 und 2 gezeigt sind, sowie dosierbare Flüssigkeitszufügsvorrichtungen 3, die beispielhaft in Fig. 1a dargestellt sind, vorgesehen, wobei den Erhebungen 22 eine oder mehrere dosierbare Flüssigkeitszuführungsvorrichtungen 3 zuordenbar sind.
Die Formen des Körpers 2 und des entsprechend komplementär geformten Gegenkörpers 1 sind in Abhängigkeit der zu bildenden Leitwege beliebig ausbildbar. So können, was nicht im einzelnen dargestellt ist, z.B. bei der Ausbildung eines Leitweges entlang der Oberfläche und in Längserstreckungsrichtung eines Zylinders die Ausnehmungen 21 und Erhebungen 22 in die Innenwandungen eines den ersten Zylinder umfassenden zweiten Zylinders bspw. schneckenförmig eingebracht sein.

Eine für spezielle, im nachstehenden beschriebene Verwendungszwecke besonders vorteilhafte Ausgestaltung des die Erhebungen 22 und Ausnehmungen 21 tragenden Körpers 2 ist, wie in den Fig. 1 und 2 dargestellt, die einer ebenen Deckplatte 23, wobei dieser der Gegenkörper 1 in Form einer ebene Trägerplatte 11 zugeordnet ist.
Die Mittel 5 zur Beabstandung sind, wie in Fig. 1 dargestellt, als Bestandteil der Deckplatte 23 bzw., wie nicht gesondert dargestellt, als Bestandteil der Trägerplatte 11, bspw. als regelmäßig verteilte Stege, ausbildbar.

Alternativ dazu sind, wie in Fig. 2 gezeigt, die Mittel 5 zur Beabstandung der Deckplatte 23 und der Trägerplatte 11 als dichtend zwischen diese einlegbare, gesondert ausgebildete Distanzstücke 51 vorgesehen, denen in Abhängigkeit vom durch den Kapillarspalt 4 zu leitendem Medium eine vorgebbar definierte Höhe x gegeben ist.
Die kapillarspaltbildenden Erhebungen 22 sind bspw., wie in den Fig. 1 und 2 dargestellt, als durchgehende Stege ausgebildet, wobei die Anordnung und der Verlauf der Erhebungen 22 den auf der Trägerplatte 11 vorgesehenen Flüssigkeitsleitwegen 43 entspricht. Die Deckplatte 23 ist auf die Trägerplatte 11 lösbar, verspannungsfrei in unterschiedlichen Richtungen aufsetzbar und auf der Trägerplatte 11 sind mehrere, voneinander unabhängige Kapillarspalte 4 vorgesehen, die mit jeweils einem Zu- und Ablauf 41; 42 versehen sind, wobei jeder Kapillarspalt 4 mit einer gesonderten Flüssigkeitszuführungseinrichtung 3, die in Fig. 1a gezeigt ist, versehen ist.
Auf dem Körper 2 können, wie im einzelnen nicht in den Figuren dargestellt, mehrere, Kapillarspalte 4 vorgesehen sein, die teilweise oder vollständig miteinander in Verbindung stehen und jeweils mit einem Zuund Ablauf 41;42 versehen sind. Dadurch eignet sich die erfindungsgemäße Vorrichtung bspw. besonders gut für komplexe Reagenzverteilungsfolgen und Automatisierungen auf der Basis planarer Träger.

Die Abmessungen des Kapillarspalts 4 sind je nach Benetzbarkeit der Materialien, die für den Körper 2 und den Gegenkörper 1 zum Einsatz gelangen, sowie der des Zustandes der zu leitenden flüssigen Medien so festgelegt, daß ausschließlich Kapillarkräfte zum Transport von Flüssigkeiten wirken. Die Abmessungen der Ausnehmungen sind so dimensioniert, daß diese selbst kapillarinaktiv sind.
Für eine Anwendung der erfindungsgemäßen Vorrichtung besitzen bspw. die Erhebungen 22, die zueinander parallel verlaufen, eine Breite b in der Größenordnung von 1,25 mm, die Ausnehmungen 21 eine Breite a von mindestens 1000 µm und eine Tiefe von mindestens 1500 µm. Unter Beachtung der Material- und Flüssigkeitseigenschaften besitzen die generierten Kapillarspalte 4 eine Länge in der Größenordnung von 200 mm. Die Höhe x der Beabstandung der Trägerplatte 11 von der Deckplatte 23 liegt im Beispiel in einer Größenordnung von 1 µm bis 1000 µm.

Zur Herstellung der Ausnehmungen 21 und der Erhebungen 22, die beliebig angeordnet sein können (z.B. parallel, verzweigt oder mäanderförmig), werden bspw. Strukturierungstechniken verwendet, wie sie aus der Halbleiterfertigung bekannt sind (z.B. Ätztechniken oder Laserablation), wobei als Material für die Deckplatten 23 bspw. Borofloatglas, welches eine hohe Ebenheit der Oberfläche besitzt, Verwendung findet.
Eine weitere Möglichkeit, die Ausnehmungen 21 in die Deckplatte 23 einzubringen, besteht bspw. in der Verwendung von Diamantwerkzeugen.
Eine Möglichkeit eine Deckplatte 23 mit parallelen Ausnehmungen 21 und Erhebungen 22 zu realisieren, besteht bspw. darin, Streifen aus frei wählbarem Material mit unterschiedlichen Dimensionierungen miteinander so zu verbinden (z.B. durch Kleben oder Verschmelzen), daß eine Anordnung mit Ausnehmungen 21 und Erhebungen 22 bspw. analog zu Fig. 1 gebildet ist.
Die Mittel 5 zur Beabstandung werden bspw. durch Verkleben oder Verschmelzen mit der Deckplatte 23 bzw. der Trägerplatte 11 verbunden bzw. sind lose zwischen den Platten 11 und 23 eingelegt. Alternativ dazu können sie durch die verwendeten Strukturierungstechnologien direkt aus dem Material der Trägerplatte 11 oder der Deckplatte 23 herausgearbeitet sein.

Die verschiedenen Flüssigkeiten werden bei der Verwendung der erfindungsgemäßen Vorrichtung durch die in Fig. 1a dargestellten Flüssigkeitszuführungseinrichtung 3 an den jeweiligen Zulauf 41 der Erhebungen 22 gebracht, wodurch vermittels der wirkenden Kapillarkräfte eine Befüllung der jeweiligen Kapillarspalte 4 erfolgt. Die Flüssigkeitszufuhr erfolgt dabei entweder durch die im linken Teil der Fig. 1a dargestellte Flüssigkeitszuführungseinrichtung 3 über die Deckplatte 23 oder ggf. durch die im rechten Teil der Fig. 1a dargestellte Flüssigkeitszuführungseinrichtung 3, die in der Trägerplatte 11 vorgesehen sein kann. Die Abführung der Flüssigkeit erfolgt über den Ablauf 42.
Als Trägerplatten 11 sind bspw. ebene, planare oder mit Ausnehmungen versehene Substratplatten eingesetzt, wobei diese Ausnehmungen bspw. mit Mikroperlen versehene Kavitäten darstellen können.
Als Trägerplatten 11 können vorteilhaft bspw. Mikro- oder Nanotiterplatten sowie in Form ebener, planarer Substanzbibliotheken ausgebildete Biochips eingesetzt werden.

In einer Verwendung der erfindungsgemäßen Vorrichtung kann bspw. durch eine quadratische, mit n + 1 parallel zueinander verlaufenden Ausnehmungen 21 versehene Deckplatte 23 eine quadratische Trägerplatte 11 mit n Zeilen von n verschiedenen Flüssigkeiten benetzt werden. Nach dem Abnehmen der Deckplatte 23, dem Entfernen der Flüssigkeiten von der Trägerplatte 11, dem Drehen der Deckplatte 23 um 90° und dem erneuten Herstellen der beabstandeten Verbindung der Deckplatte 23 zur Trägerplatte 11 ist das Benetzen mit n Spalten von n verschiedenen Flüssigkeiten möglich, so daß ein n·n-Raster der Schnittpunke der Zeilen und Spalten entsteht. Unter Einsatz der im Beispiel beschriebenen Vorrichtung ist eine orthogonale Flüssigkeitsverteilung, wie sie bspw. in der kombinatorischen Chemie für die Synthese von Substanzbibliotheken erforderlich ist, in besonders leichter Weise realisierbar.

### Bezugszeichenliste

- 1 -: Gegenkörper
- 11 -: Trägerplatte
- 2 -: Körper
- 21 -: Ausnehmungen
- 22 -: Erhebungen
- 23 -: Deckplatte
- 3 -: Flüssigkeitszuführungseinrichtung
- 4 -: Kapillarspalt
- 41 -: Zulauf
- 42 -: Ablauf
- 43 -: Flüssigkeitsleitweg
- 5 -: Mittel zur Beabstandung
- 51 -: Distanzstücke
- a -: Breite der Ausnehmungen
- b -: Breite der Erhebungen
- x -: Höhe

## Patentansprüche

1. Vorrichtung für den Transport von Flüssigkeiten entlang vorgegebener Leitwege, die in einem Körper (2) vorgesehen sind, wobei die die Leitwege bildenden Strukturen auf einen entsprechend komplementär geformten Gegenkörper (1) lösbar aufgesetzt sind, **dadurch gekennzeichnet, daß** der Kölper (2) mit Ausnehmungen (21) sowie Erhebungen (22), die Kapillarspalte (4) zum Flüssigkeitstransport ausschließlich über Kapillarkräfte bilden, versehen ist und den Erhebungen (22) eine oder mehrere dosierbare Flussigkeitszuführungsvorrichtungen (3) zugeordnet sind, und daß Mittel (5) zur Beabstandung vorgesehen sind, wobei zwischen benachbarten Erhebungen (22) jeweils eine so große Ausnehmung (21), mit einer Breite von mindestens 1000 µm und einer Tiefe von mindestens 1500 µm, verbleibt, daß im Bereich der Ausnehmungen (21) ein Flüssigkeitstransport über Kapillarkräfte ausgeschlossen ist.

2. Vorrichtung nach Anspruch 1, **dadurch gekennzeichnet, daß** jeder Kapillarspalt (4) mit einer gesonderten Flüssigkeitszuführungseinrichtung (3) versehen ist.

3. Vorrichtung nach Anspruch 1, **dadurch gekennzeichnet, daß** der die Erhebungen (22) und Ausnehmungen (21) tragende Körper (2) durch eine ebene Deckplatte (23) gebildet ist.

4. Vorrichtung nach den Ansprüchen 1 und 3, **dadurch gekennzeichnet, daß** der Gegenkörper (1) durch eine ebene Trägerplatte (11) gebildet ist.

5. Vorrichtung nach den Ansprüchen 1 und 4, **dadurch gekennzeichnet, daß** die Mittel (5) zur Beabstandung Bestandteil der Trägerplatte (11) sind.

6. Vorrichtung nach den Ansprüchen 1 und 3, **dadurch gekennzeichnet, daß** die Mittel (5) zur Beabstandung Bestandteil der Deckplatte (23) sind.

7. Vorrichtung nach Anspruch 1, **dadurch gekennzeichnet, daß** die Mittel (5) zur Beabstandung als regelmäßig verteilte Stege angeordnet sind.

8. Vorrichtung nach Anspruch 1, **dadurch gekennzeichnet, daß** die Mittel (5) zur Beabstandung des Körpers (2) und des Gegenkörpers (3) als dichtend zwischen diese einlegbare, gesondert ausgebildete Distanzstücke (51) ausgebildet sind, denen in Abhängigkeit vom durch den Kapillarspalt (4) zu leitenden Medium eine vorgebbar definierte Höhe (x) gegeben ist

9. Vorrichtung nach Anspruch 1, **dadurch gekennzeichnet, daß** die kapiliarspaltbildenden Erhebungen (22) als durchgehende Stege ausgebildet sind.

10. Vorrichtung nach den Ansprüchen 3 und 4, **dadurch gekennzeichnet, daß** die Deckplatte (23) auf der Trägerplatte (11) lösbar und verspannungsfrei in unterschiedlichen Richtungen aufgesetzt ist.

11. Vorrichtung nach Anspruch 1, **dadurch gekennzeichnet, daß** auf dem Körper (2) mehrere, voneinander unabhängige Kapillarspalte (4) mit jeweils einem Zu- und Ablauf (41; 42) vorgesehen sind.

12. Vorrichtung nach Anspruch 1, **dadurch gekennzeichnet, daß** auf dem Körper (2) mehrere, Kapillarspalte (4) vorgesehen sind, die teilweise oder vollständig miteinander verbunden sind und jeweils verbundene Kapillarspalte mit einem Zu- und Ablauf (41; 42) versehen sind.

13. Vorrichtung nach den Ansprüchen 1, 3 und 4, **dadurch gekennzeichnet, daß** die Anordnung und der Verlauf der Erhebungen (22) durch die auf der Trägerplatte (11) vorgebenen Flussigkeitsleitwege (43) festgelegt sind.

14. Verwendung einer Vorrichtung für den Transport von Flüssigkeiten entlang vorgegebener Leitwege nach einem oder mehreren der vorangegangenen Ansprüche, **dadurch gekennzeichnet, daß** für die Trägerplatte (11) ebene, planare oder mit Ausnehmungen versehene Substratplatten eingesetzt werden.

15. Verwendung einer Vorrichtung für den Transport von Flüssigkeiten entlang vorgegebener Leitwege nach einem oder mehreren der Ansprüche 1 bis 13, **dadurch gekennzeichnet, daß** für die Trägerplatte (11) Biochips eingesetzt werden.

16. Verwendung einer Vorrichtung für den Transport von Flüssigkeiten entlang vorgegebener Leitwege nach einem oder mehreren der Ansprüche 1 bis 13, **dadurch gekennzeichnet, daß** für die Trägerplatte (11) Mikro- oder Nanotiterplatten eingesetzt werden.

## Claims

1. A device for transporting liquids along predetermined guideways, which are provided in a body (2), whereby the structures forming the guideways are attached to a corresponding complementarily shaped opposite body (1), **characterized in that** the body (2) is provided with recesses (21) and elevations (22), which form capillary gaps (4) for transporting liquids exclusively by capillary forces, and **in that** at least one liquid supply means (3) adapted to be dosed is associated to the elevations (22 ), and **in that** means (5) for spacing apart are provided, whereby between each adjacent elevations (22) there remains such a large recess (21), having a width of at least 1,000µm and a depth of at least 1,500µm that in the range of the recesses (21) a transport of liquids by capillary force is eliminated.

2. A device as claimed in claim 1, **characterized in** claim 1, **characterized in that** each capillary gap (4) is provided with a discrete liquid supply means (3).

3. A device as claimed in claim 1, **characterized in that** the body (2) supporting the elevations (22) and the recesses (21) is formed by a plane cover plate (23).

4. A device as claimed in claims 1 and 3, **characterized in that** the opposite body (1) is formed by a plane support plate (11).

5. A device as claimed in claims 1 and 4, **characterized in that** the spacing means (5) are components of the support plate (11).

6. A device as claimed in claim 1 and 3, **characterized in that** the spacing means (5) are components of the cover plate (23).

7. A device as claimed in claim 1, **characterized in that** the spacing means (5) are arranged in the form of regularly distributed bars.

8. A device as claimed in claim 1, **characterized in that** the means (5) for spacing apart the body (2) and the opposite body (1) are designed as discrete spacer elements (51) sealingly insertable between the body (2) and the opposite body (1), said spacer elements (51) being given a preselectably defined height (x) in dependence on the fluid to be directed along the capillary gap (4).

9. A device as claimed in claim 1, **characterized in that** the capillary gap forming elevations (22) are designed as through bars.

10. A device as claimed in claim 3 and 4, **characterized in that** the cover plate (23) is adapted to be attached to the support plate (11) detachably and free of tensions in different directions.

11. A device as claimed in claim 1, **characterized in that**, on the body (2), a plurality of capillary gaps (4) is provided independently from each other and with an inlet and outlet each (41; 42).

12. A device as claimed in claim 1, **characterized in that**, on the body (2), a plurality of capillary gaps (4) is provided, which are partially or entirely connected to each other, and the respective connected capillary gaps (4) are provided with an inlet and outlet (41; 42).

13. A device as claimed in claim 1, 3 and 5, **characterized in that** the arrangement and the route of the elevations (22) are determined by the liquid guideways (43) predetermined on the support plate (11).

14. Application of a device for transporting liquids along predetermined guideways as claimed in at least one of the preceding claims, **characterized in that** plane, planar or substrate plates provided with recesses are used as support plates (11).

15. Application of a device for transporting liquids along predetermined guideways as claimed in claim 1 to 13, **characterized in that** bio-chips are used as support plate (11).

16. Application of a device for transporting liquids along predetermined guideways as claimed in claim 1 to 13, **characterized in that** micro-titer plates or nano-titer plates are used as support plate (11).

## Revendications

1. Dispositif destiné à transporter des liquides le long de voies de guidage prédéterminées prévues sur un corps (2), les structures faisant fonction de voies de guidage étant conçues de sorte qu'elles correspondent à la structure du corps (1) dont la configuration étant complémentaire à celle du corps (2) situé en face pour permettre de placer ces structures sur le corps (1) de manière non définitivement solidaire, est **caractérisé en ce que** le corps (2) est pourvu aussi bien d'évidements (21) que de bosses (22) formant des fentes capillaires (4) pour assurer le transport uniquement moyennant de forces capillaires, qu'aux bosses sont attribués un ou plusieurs systèmes d'alimentation en fluide (3) permettant un dosage précis, que le dispositif comprend des moyens (5) assurant les écartements garantissant que la distance séparant les bosses adjacentes (22) les unes des autres forme un évidement (21) d'une largeur d'au moins de 1000 µm et d'une profondeur d'au moins de 1500 µm, donc si important que dans la zone des évidements (21) tout transport de fluides par force capillaire soit exlu.

2. Dispositif selon la revendication 1 est **caractérisé en ce que** toute fente capillaire (4) est dotée d'un système individuel d'alimentation en fluide (3).

3. Dispositif selon la revendication 1 est **caractérisé en ce qu'**une plaque de recouvrement plane (23) fait fonction de corps (2) pourvu de bosses (22) et d'évidements (21).

4. Dispositif selon les revendications 1 et 3 est **caractérisé en ce que** le corps en position opposée (1) est formé comme une plaque support plane (11).

5. Dispositif selon les revendications 1 et 4 est **caractérisé en ce que** les moyens (5) assurant l'écartement entre les bosses font partie de la plaque support (11).

6. Dispositif selon les revendications 1 et 3 est **caractérisé en ce que** les moyens (5) assurant les écartements font partie de la plaque de recouvrement (23).

7. Dispositif selon la revendication 1 est **caractérisé en ce que** les moyens d'écartement (5) sont disposés de manière régulière formant ainsi une sorte d'entretoises.

8. Dispositif selon la revendication 1 est **caractérisé en ce que** les moyens d'écartements (5) assurant la distance entre le corps (2) et le corps en position opposée (3) sont configurés comme pièces distance individuelles (51) à insérer pour assurer l'étanchéité, dont la hauteur (x) est prédéfinie en fonction du fluide à transporter à travers la fente capillaire (4).

9. Dispositif selon la revendication 1 est **caractérisé en ce que** les bosses (22) formant des fentes capillaires sont conçues comme des entretoises ininterrompues.

10. Dispositif selon les revendications 3 et 4 est **caractérisé en ce que** la plaque de recouvrement (23) se monte sur la plaque support (11) selon différents sens, sans se gauchir et non solidaire.

11. Dispositif selon la revendication 1 est **caractérisé en ce que** sur le corps (2) sont prévues plusieurs fentes capillaires (4), indépendantes les unes des autres et chacune dotée de systèmes individuels d'alimentation et d'évacuation (41; 42).

12. Dispositif selon la revendication 1 est **caractérisé en ce que** le corps (2) est pourvu de plusieurs fentes capillaires (4) liées entre elles, complètement ou en partie, chacune dotée de systèmes d'alimentation et d'évacuation (41; 42).

13. Dispositif selon les revendications 1, 3 et 4 est **caractérisé en ce que** la disposition et la configuration des bosses (22) sont définies en fonction des les voies de guidage du fluide (43) prévues sur la plaque support (11).

14. Application selon une des revendications précédentes, d'un dispositif assurant le transport de fluides le long de voies de guidage prédéfinies est **caractérisée en ce que** pour la plaque support (11) sont utilisées des plaques aux substrats soit planes soit dotées d'évidements.

15. Application suivant les revendications 1 à 13, d'un dispositif assurant le transport de fluides long de voies de guidage prédéfinies est **caractérisée en ce que** des biopuces sont utilisées pour faire fonction de plaque support (11).

16. Application suivant les revendications 1 à 13, d'un dispositif assurant le transport de fluides le long de voies de guidage prédéfinies selon une ou plusieurs des revendications précédentes est **caractérisée en ce que** des plaques de micro- ou de nanotitration sont utilisées pour servir de plaque support (11).
